# EUROPÄISCHE PATENTANMELDUNG

(11) **EP 3 106 328 A1**
(43) Veröffentlichungstag der Anmeldung: **21.12.2016**
(21) Anmeldenummer: 16173371.2
(22) Anmeldetag: 07.06.2016
(51) Int. Cl.: B60H 1/00, B60H 1/34, B60H 1/24, B62D 1/04

(54) **VORRICHTUNG ZUR BELÜFTUNG EINER LENKRADUMGEBUNG UND VERFAHREN ZUM BETRIEB DER VORRICHTUNG**

(30) Priorität: 16.06.2015 DE 102015211056
(71) Anmelder: Ford Global Technologies, LLC, Dearborn, MI 48126 (US)
(72) Erfinder: Stefan, Frederic, 52072 Aachen (DE)
(74) Vertreter: Dörfler, Thomas

(57) **Zusammenfassung**

Die Erfindung betrifft eine Vorrichtung zur Belüftung einer Lenkradumgebung eines Fahrzeugs, enthaltend mindestens einen einstellbaren Luftausströmer (3) in Lenkradnähe, wobei die Einstellbarkeit des Luftausströmers (3) dazu ausgebildet ist, mindestens einen imaginären Punkt auf dem Lenkrad bei verschiedenen Drehwinkeln des Lenkrads (1) mit einem Luftstrom (4) zu erreichen, sowie ein Verfahren zum Betrieb der Vorrichtung. Bei der erfinderischen Vorrichtung kann der mindestens eine Luftausströmer (3) synchron mit einer Lenkraddrehung verstellt werden, so dass der Luftstrom (4) während und/oder nach der Ausführung der Lenkraddrehung der Bewegung des mindestens einen imaginären Punktes auf dem Lenkrad (1) näherungsweise folgt.

## Beschreibung

Die Erfindung betrifft eine Vorrichtung zur Belüftung einer Lenkradumgebung eines Fahrzeugs, enthaltend mindestens einen einstellbaren Luftausströmer in Lenkradnähe, wobei die Einstellbarkeit des Luftausströmers dazu ausgebildet ist, mindestens einen imaginären Punkt auf dem Lenkrad bei verschiedenen Drehwinkeln des Lenkrads mit einem Luftstrom zu erreichen, sowie ein Verfahren zum Betrieb der Vorrichtung.

Vorrichtungen zur Belüftung oder Beheizung eines Lenkrades eines Fahrzeuges, insbesondere eines Kraftfahrzeuges, sind bekannt. Insbesondere die elektrische Beheizung von Lenkrädern wird zunehmend eingesetzt, um einem Defizit an Abwärme zu begegnen, das sich bei besonders effizienten Fahrzeugantrieben ergibt. Durch Konzentration von Wärme auf Stellen im Fahrzeug, die den Insassen ein möglichst direktes thermisches Empfinden ermöglichen, wird der Effekt, der mit begrenzter Wärme erreicht werden kann, maximiert. Da das Lenkrad einen direkten Kontakt mit den Händen des Fahrers hat bzw. die Hände des Fahrers während der Fahrt gewöhnlich auf dem Lenkrad sind, lässt sich hier eine unmittelbare Beeinflussung des thermischen Komforts erzielen. In diesem Zusammenhang ist auch besonders interessant, dass die Hände, und insbesondere die Finger, meist unbekleidet sind, und an und für sich eine hohe Empfindlichkeit gegenüber Hitze und Kälte aufweisen, mithin für das thermische Komfortempfinden besonders wichtig sind.

Elektrische Lenkradheizungen sind unter dem Kostenaspekt allerdings durchaus nachteilig, und erfordern weitere fahrzeugseitige Maßnahmen, insbesondere am elektrischen System, um sie betreiben zu können. Zudem ergibt sich der Nachteil, dass im Gegensatz zur Heizung eine direkte und leistungsfähige Lenkradkühlung durch Wärmeleiteffekte mit einer deutlicher höheren Komplexität einhergehen würde und bis dato nicht praktikabel ist.

Ein Verfahren und eine Vorrichtung zur Erzeugung eines Luftstroms für ein Kraftfahrzeug werden in der DE 10 2008 005 894 A1 beschrieben. Dabei wird ein Luftstrom aus einer oder mehreren Öffnung(en) in einem Lenkrad auf ein oder beide Handgelenke eines Fahrers gelenkt. Der Luftstrom wird insbesondere auf zwei Winkelbereiche des Lenkrades geleitet, die der sogenannten "10 vor 2"-Stellung entsprechen. Mit "10 vor 2"-Stellung ist eine Lenkradhaltung gemeint, bei der die linke Hand des Fahrers 60° links von der oberen Mitte des Lenkradumfangs platziert ist und die rechte Hand 60° rechts von der oberen Mitte des Lenkradumfangs. Die Benennung orientiert sich an der Analogie zur Platzierung der Zeiger auf dem Ziffernblatt einer traditionellen Analoguhr bei der Uhrzeit 10 vor 2 oder 1:50 Uhr.

Nachteilig bei diesem beschriebenen Verfahren, bzw. bei der Vorrichtung, ist primär der Umstand, dass konditionierte Luft in das drehbare Lenkrad eingebracht werden muss, bevor sie durch Lenkradöffnungen an den vorbestimmten Stellen austreten kann. Die Konstruktion und Umsetzung entsprechender Luftführungselemente, insbesondere Belüftungskanäle, unter der Vermeidung von Undichtigkeit, Geräuschentwicklung, übermäßigem Druckverlust des Luftstroms, und Temperaturänderungen durch unzureichende thermische Isolation, ist im beengten Package der Fahrzeugumgebung nur schwer zu realisieren.

Aus der nachveröffentlichten DE 10 2014 206 215 A1 sind ein Verfahren und eine Vorrichtung zur Steuerung eines Luftstroms in Lenkradnähe bei einem Fahrzeug bekannt, bei denen der Luftstrom an unterschiedliche Hand- und Fingerhaltungen bei Berührung des - in Geradeausstellung befindlichen - Lenkrades angepasst werden kann. Aus diesem Dokument ist es jedoch u.a. nicht bekannt, Luftausströmer synchron mit einer Lenkraddrehung zu verstellen.

Aufgabe der vorliegenden Erfindung ist es daher, eine Vorrichtung zur Belüftung einer Lenkradumgebung und ein Verfahren zum Betrieb der Vorrichtung bereitzustellen, mit der die genannten Nachteile vermieden werden.

Diese Aufgabe wird gelöst durch eine Vorrichtung zur Belüftung einer Lenkradumgebung eines Fahrzeugs nach Anspruch 1 und ein Verfahren nach Anspruch 11. Die Vorrichtung enthält mindestens einen einstellbaren Luftausströmer in Lenkradnähe, wobei die Einstellbarkeit des mindestens einen Luftausströmers dazu ausgebildet ist, mindestens einen imaginären Punkt auf dem Lenkrad bei verschiedenen Drehwinkeln des Lenkrads mit einem Luftstrom zu erreichen. Bei der erfinderischen Vorrichtung kann der mindestens eine Luftausströmer synchron mit einer Lenkraddrehung verstellt werden, so dass der Luftstrom während und/oder nach der Ausführung der Lenkraddrehung der Bewegung des mindestens einen imaginären Punktes auf dem Lenkrad näherungsweise folgt.

Unter Lenkrad sind dabei im Sinne der Erfindung auch andere gleichwertige Vorrichtungen zu verstehen, mit der ein Fahrer ein Fahrzeug lenken oder steuern kann, also beispielsweise auch eine Lenkstange oder ein Lenker eines einspurigen oder mehrspurigen Fahrzeugs, ein Lenkknüppel, oder ähnliches.

Eine Lenkraddrehung ist eine rotatorische Bewegung des Lenkrads um seine zentrale Achse bzw. um die Lenksäule, die zum Zweck der Richtungsänderung des Fahrzeugs ausgeführt wird. Nach dem Ende der Lenkraddrehung kann das Lenkrad in einer beliebigen Winkelstellung bzgl. der Ausgangslage vor der Drehung und/oder bzgl. seiner Nulllage bei Geradeaus-Stellung stehen. Es kann also auch verdreht sein. Eine Lenkradverdrehung ist eine Lenkradstellung, die von der Geradeaus-Stellung abweicht.

Mit Lenkradumgebung ist der Bereich um das Lenkrad gemeint, in dem sich die Hände des Fahrers üblicherweise während der Fahrt befinden. Der Bereich umgibt den äußeren Umfang des Lenkradkranzes bzw. der Handauflageflächen des Lenkrads, und erstreckt sich so weit vom Lenkrad, dass wie auch immer am Lenkrad platzierte Hände sich jederzeit in diesem Bereich befinden. Der Bereich der Lenkradumgebung umschließt auch Schalter und sonstige Bediengeräte, die vom Fahrer mit der Hand am Lenkrad während der Fahrt erreicht werden können, wie beispiels-weise - aber nicht ausschließlich - zur Bedienung von Fahrtrichtungsanzeigern, Scheibenwischern, Hupe, Schweinwerfern, Radio, Bordcomputer, Tempomat, oder auch Getriebe-Schaltpaddel oder Schalthebel einer Lenkradschaltung. Lenkradverstellmöglichkeiten wie Höhenverstellung, Neigungsverstellung, oder Längenverstellung erweitern die Lenkradumgebung um den entsprechenden Verstellbereich.

Belüftung der Lenkradumgebung bedeutet das Erzeugen mindestens eines Luftstroms, der Luft in die Lenkradumgebung einbringt und dadurch auch Luft aus der Lenkradumgebung verdrängt, oder auch innerhalb der Lenkradumgebung eine rezirkulierende oder umwälzende Luftströmung erzeugt. Mit der Belüftung der Lenkradumgebung kann auch eine Temperierung der Lenkradumgebung verbunden sein, dadurch dass Luft mit einer höheren oder niedrigeren Temperatur in die Lenkradumgebung eingebracht wird. Es kann also eine Beheizung oder Kühlung der Lenkradumgebung realisiert werden. Ebenso kann mit der Belüftung der Lenkradumgebung eine Konditionierung hinsichtlich der Luftfeuchtigkeit verbunden sein, dadurch dass Luft mit einer niedrigeren oder höheren absoluten Luftfeuchtigkeit in die Lenkradumgebung eingebracht wird. Es kann also auch beispielsweise eine Entfeuchtung der Lenkradumgebung realisiert werden.

Bei der Erfindung ist mindestens ein einstellbarer Luftausströmer in Lenkradnähe angebracht. Unter Lenkradnähe ist dabei eine Entfernung von dem Lenkrad oder von der Lenkradumgebung zu verstehen, die klein genug ist, dass ein mit dem Luftausströmer erzeugter Luftstrom die Lenkradumgebung erreichen kann, um die oben beschriebene Belüftung zu erzielen.

Die Einstellbarkeit des mindestens einen Luftausströmers kann verschieden ausgestaltet sein. Es kann sich dabei um eine Einstellbarkeit hinsichtlich der Richtung des Luftstroms handeln. Dies kann beispielsweise durch zwei am Luftausströmer zueinander senkrecht angeordnete, winkelverstellbare Lamellenpakete erreicht werden, von denen eines eine oben/unten-Verstellung und das andere eine rechts/links-Verstellung ermöglicht. Vielfältige andere Konzepte sind denkbar und finden Verwendung bei den in Kraftfahrzeugen üblichen Personenanströmern der Klimaanlage, die typischerweise an der Instrumententafel angebracht sind. Es kann auch eine Einstellbarkeit bezüglich der Auffächerung des Luftstroms gegeben sein, d.h. der Luftstrom kann entweder eng gebündelt oder breit aufgefächert aus dem Ausströmer austreten. Auch solche Verstellmöglichkeiten werden schon bei den erwähnten Personenanströmern eingesetzt. Schließlich ist auch eine Einstellbarkeit im Hinblick auf die Luftmenge und/oder Luftgeschwindigkeit bzw. Intensität des austretenden Luftstroms realisierbar. Beispielsweise kann durch eine variable Drosselung des Luftausströmers, d.h. durch Öffnen oder Schließen, die Reichweite und Intensität des Luftstroms verstellt werden. Ebenso kann die Einstellbarkeit der Luftmenge und/oder Luftgeschwindigkeit bzw. Intensität des austretenden Luftstroms durch eine variable Regelung eines Gebläses, das dem Luftausströmer vorgeschaltet ist, erreicht werden. Eine Kombination der verschiedenen Einstellmöglichkeiten bzgl. Luftrichtung, Auffächerung und Intensität ist natürlich möglich.

In jedem Fall muss die Einstellbarkeit des mindestens einen Luftausströmers dazu ausgebildet sein, mindestens einen imaginären Punkt auf dem Lenkrad bei verschiedenen Drehwinkeln des Lenkrads mit einem Luftstrom zu erreichen. Punkte auf dem Lenkrad, die erreicht werden können, sollten dabei die Stellen sein, wo die Hände des Fahrers vorwiegend platziert sind. Wird das Lenkrad verdreht, um eine Richtungsänderung des Fahrzeugs zu bewirken, so sollten diese Punkte weiterhin mit dem Luftstrom zu erreichen sein. Ein Erreichen dieser Punkte bedeutet dabei, dass an diesen Punkten eine Luftgeschwindigkeit erzeugt werden kann, die von dem Fahrer mit einer unbekleideten Hand spürbar ist.

Es bietet sich hier auch die Möglichkeit an, mehrere Luftausströmer vorzusehen, so dass durch die Kombination eine bessere Abdeckung der Lenkradumgebung erreicht werden kann. Es kann beispielsweise ein erster Luftausströmer einen ersten Bereich der Lenkradumgebung abdecken, ein zweiter Luftausströmer einen zweiten Bereich und so weiter. Ein imaginärer Punkt auf dem Lenkrad, der während einer Lenkraddrehung den ersten Bereich verlässt und in den zweiten Bereich eintritt, kann dann zuerst von dem Luftstrom des ersten Luftausströmers erreicht werden und danach von dem Luftstrom des zweiten Luftausströmers. Je nach geometrischer Komplexität des Lenkrads, der Lenkradumgebung und der Einbauverhältnisse im Fahrzeug kann auch eine größere Anzahl von Luftausströmern und zugehörigen Bereichen der Lenkradumgebung vorgesehen werden.

Durch das Erreichen derjenigen Punkte auf dem Lenkrad, an denen die Hände des Fahrers vorwiegend platziert sind, ist es möglich, direkt die Fahrerhände und deren Umfeld mit konditionierter Luft zu versorgen, und damit das thermische Komfortempfinden des Fahrers unmittelbar zu beeinflussen. Dadurch, dass diese Punkte auf dem Lenkrad auch bei einer Lenkradverdrehung erreicht werden können, ist die Beeinflussung des Komfortempfindens nicht nur bei Geradeausfahrt des Fahrzeugs möglich, sondern auch bei Kurvenfahrten.

Um eine konstante, nicht durch Drehbewegungen des Fahrers am Lenkrad unterbrochene, Belüftung bestimmter Punkte auf dem Lenkrad zu ermöglichen, ist die Erfindung dadurch gekennzeichnet, dass der mindestens eine Luftausströmer synchron mit einer Lenkraddrehung verstellt werden kann, so dass der Luftstrom während und/oder nach der Ausführung der Lenkraddrehung der Bewegung des mindestens einen imaginären Punktes auf dem Lenkrad näherungsweise folgt. Die synchrone Verstellung des mindestens einen Luftausströmers kann dabei beispielsweise durch eine mechanische Verbindung des Luftausströmers mit dem Lenkrad oder am Lenkrad befestigter Teile, insbesondere einer Lenksäule, bewerkstelligt werden, die eine Drehbewegung des Lenkrads in eine Bewegung mindestens einer Verstelleinrichtung des Luftausströmers überträgt. Ebenso ist es möglich, die synchrone Verstellung auf mechatronischem Weg zu realisieren. Durch eine Sensorik kann dabei der Lenkradverdrehwinkel erfasst werden, und basierend auf einer Auswertung des erfassten Winkels in einem Steuergerät und Ansteuerung mindestens eines Aktuators kann die Verstellung des mindestens einen Luftausströmers geregelt werden. Als Sensorik kommt ein entsprechender Winkelsensor am Lenkrad oder an der Lenksäule des Fahrzeugs in Frage, aber auch beispielsweise eine Auswerteeinheit, die basierend auf anderen Mess- und Betriebsdaten aus dem Bordnetz des Fahrzeugs, wie beispielsweise Informationen von Radsensoren oder Beschleunigungssensoren, die Verdrehung des Lenkrads bestimmt.

Vorteilhaft ist es, wenn der mindestens eine einstellbare Luftausströmer eine Düse ist, deren Ausströmquerschnitt im Wesentlichen parallel zu der Lenkradebene liegt. Das bedeutet, dass die Ausströmrichtung der Düse im Wesentlichen parallel zur Drehachse des Lenkrads ist, wobei die Düse sinnvollerweise in Fahrzeuglängsrichtung von dem Lenkrad beabstandet angeordnet ist, so dass durch eine Richtungsverstellung und/oder variable Auffächerung des Luftstroms ein möglichst großer Bereich der Lenkradumgebung erreicht werden kann. In der in Kraftfahrzeugen üblichen Anordnung von verstellbaren Personenanströmern der Klimaanlage, die an der Instrumententafel in Lenkradnähe angebracht sind, können diese Personenausströmer als Luftausströmer der erfinderischen Vorrichtung verwendet werden.

Besonders vorteilhaft ist es, wenn die erfinderische Vorrichtung Mittel enthält, die dazu ausgebildet sind, die Temperatur und/oder Luftfeuchtigkeit des Luftstroms des mindestens einen Luftausströmers zu verstellen. Das Komfortempfinden des Fahrers kann dann besonders gut beeinflusst werden, wenn die Luft des Luftstroms entsprechend konditioniert wird.

Durch das Bereitstellen von warmer Luft kann eine effektive Heizung für die Fahrerhände umgesetzt werden, deren Energiebedarf vergleichsweise niedrig ist. Beispielsweise kann bei einem Fahrzeugwarmlauf unter Kaltbedingungen durch Erwärmen der Fahrerhände mittels der erfinderischen Vorrichtung ein schneller Heizeffekt erreicht werden, wobei die energieintensive Aufheizung kalter Bauteile mit hoher Wärmekapazität im Fahrzeuginnenraum oder am Lenkrad vermieden werden kann. In ähnlicher Weise kann auch dann noch ein Heizeffekt erreicht werden, wenn die Abwärme des Motors und/oder die Leistung evtl. verbauter (Zu-)Heizvorrichtungen nicht dazu ausreicht, den gesamten Innenraum des Fahrzeugs, oder die Fahrerumgebung, über eine konventionelle Fahrzeugheizung auf eine komfortable Temperatur zu bringen. Weiterhin ist es möglich, eine fühlbare Heizwirkung zu erzielen, selbst wenn die Fahrerumgebung nicht vollständig aufgewärmt werden kann, weil beispielsweise das Fahrzeug keinen abgeschlossenen Innenraum aufweist, oder es sich um ein Cabriolet mit geöffnetem Verdeck handelt.

Durch das Bereitstellen von kühler und/oder trockener Luft kann eine effektive Kühlung der Fahrerhände realisiert werden. In analoger Weise zur Heizung der Fahrerhände kann so auch schnell und energiesparend ein vom Fahrer direkt empfundener Kühleffekt realisiert werden. Es lässt sich auch in einem heißen Fahrzeuginnenraum oder in einem offenen Fahrzeug in heißer Umgebung bei geringem Einsatz von Kälteleistung eine subjektiv gute Kühlwirkung verwirklichen.

Weiterhin ist es von Vorteil, wenn die erfinderische Vorrichtung Messmittel beinhaltet, die konfiguriert sind, die Position mindestens einer Hand auf dem Lenkrad zu erfassen. Dadurch wird es ermöglicht, den Luftstrom des mindestens einen Luftausströmers direkt auf die tatsächliche Position dieser Hand bzw. auf die tatsächlichen Positionen der Fahrerhände auszurichten. So kann im Vergleich zur Ausrichtung auf eine vermutete und/oder übliche Position der Fahrerhände, wie beispielsweise die sogenannte "10 vor 2"-Stellung, ein robusterer Belüftungseffekt erzielt werden. Der mindestens eine imaginäre Punkt, dem der Luftstrom bei einer Lenkraddrehung folgt, kann dann anhand der Information dieser Messmittel festgelegt werden. Auf diese Weise kann auch eine Bewegung mindestens einer Hand auf dem Lenkrad berücksichtigt werden. Beispielsweise kann bei einem Umgreifen des Fahrers, das erforderlich wird, wenn das Lenkrad soweit verdreht ist, dass es nicht mehr weiter verdreht werden kann ohne die Hände auf dem Lenkrad anders zu platzieren, der imaginäre Punkt auf dem Lenkrad, dem der Luftstrom folgt, von der alten Handposition zur neuen Handposition verlegt werden. Genauso ist es möglich, eine Änderung der Positionierung der Hände bei Geradeausfahrt zu detektieren, und die Belüftung der Lenkradumgebung dementsprechend umzustellen.

In bevorzugten Ausführungsformen der Erfindung enthalten diese Messmittel mindestens einen Kapazitätssensor, einen Drucksensor oder eine Kamera.

Vorteilhafterweise beinhaltet die erfinderische Vorrichtung weitere Messmittel, die konfiguriert sind, Feuchtigkeit auf mindestens einer Hand und/oder der Lenkradoberfläche zu erfassen. Durch eine Information über Feuchtigkeit auf der Hautoberfläche einer Hand kann unter Berücksichtigung damit verbundener Verdunstungskühlung der subjektiv empfundene Effekt eines Luftstroms auf die thermische Behaglichkeit besser eingeschätzt werden. So kann die gewünschte Beeinflussung des Komfortempfindens des Fahrers noch feinfühliger und/oder effizienter umgesetzt werden.

Es ist darüber hinaus bevorzugt, wenn die Vorrichtung mindestens einen Schalter beinhaltet, mit dem sie aktiviert und/oder deaktiviert werden kann. Wenn die erfinderische Vorrichtung mit anderen Einrichtungen im Fahrzeug, insbesondere der Klimaanlage, kombiniert ist, ergibt sich mit dem Schalter auch der zusätzliche Vorteil, den mindestens einen Luftausströmer der Vorrichtung für verschiedene Funktionen zu nutzen, wobei die Belüftung der Lenkradumgebung eine dieser Funktionen ist. Der Schalter kann auch mit anderen Funktionen des Fahrzeugs verknüpft sein, beispielsweise dem Öffnen und/oder Schließen des Verdecks oder Daches bei einem Cabriolet oder einem sonstigem offenen oder teilweise offenen Fahrzeug.

Es ist auch von Vorteil, wenn die Vorrichtung ein Lenkrad enthält, dessen Oberfläche einen geringen Wärmeeindringkoeffizienten aufweist. Durch den Wärmeeindringkoeffizienten, der aus der Wärmeleitfähigkeit, der Dichte und der Wärmekapazität eines Körpers berechnet werden kann, kann das Temperaturempfinden bei Kontakt mit diesem Körper beschrieben werden. Da durch Wärmeleitung bei Kontakt einer Hand mit einem Lenkrad - je nach Temperatur des Lenkrads - der Hand entweder Wärme entzogen oder zugeführt wird, kann ein durch den Luftstrom mit der erfinderischen Vorrichtung erzeugter und/oder beabsichtigter Effekt auf das thermische Komfortempfinden des Fahrers dadurch beeinflusst bzw. gemindert werden. Ein kaltes Lenkrad fühlt sich umso kälter an, je höher der Wärmeeindringkoeffizient an seiner Oberfläche ist. Genauso fühlt sich ein warmes oder heißes Lenkrad umso heißer an, je höher der Wärmeeindringkoeffizient an seiner Oberfläche ist. Daher ist es sinnvoll, wenn die Lenkradoberfläche einen geringen Wärmeeindringkoeffizienten aufweist. Als gering ist dabei ein Wert zu verstehen, der kleiner als 1 *Ws*^{0,5}*m*⁻²*K*⁻¹ ist. Insbesondere sind die Bereiche der Lenkradoberfläche, die meist in direktem Kontakt mit den Händen des Fahrers stehen, wie beispielsweise der äußere Lenkradumfang bzw. Lenkradkranz oder Handauflageflächen des Lenkrads, zu beachten.

Bei dem erfinderischen Verfahren zum Betrieb der Vorrichtung wird der mindestens eine einstellbare Luftausströmer in Lenkradnähe so verstellt, dass der Luftstrom während und/oder nach der Ausführung der Lenkraddrehung der Bewegung mindestens eines imaginären Punktes auf dem Lenkrad näherungsweise folgt. Das Folgen eines imaginären Punktes auf dem Lenkrad mit dem Luftstrom bedeutet dabei, dass die durch den Luftstrom erzeugte Luftgeschwindigkeit im Bereich dieses Punktes auf dem Lenkrad mit einer dort befindlichen unbekleideten Hand spürbar ist und bei einer Drehung des Lenkrades mit der unverändert dort befindlichen unbekleideten Hand unverändert spürbar bleibt. Bewegt sich man sich aber in einem gedachten, lenkradfesten Koordinatensystem von diesem imaginären Punkt weg, so kann die Luftgeschwindigkeit kleiner werden. Ein Ziel ist dabei, den Luftstrom auf diese Stelle zu konzentrieren, um den Energiebedarf zur Erzeugung und ggf. Konditionierung des Luftstroms zu minimieren. Daher ist es sinnvoll, den Luftstrom so auszurichten, dass sich an dem imaginären Punkt ein lokales Maximum der Luftgeschwindigkeit einstellt. Die Verstellung des mindestens einen Luftausströmers, um dem mindestens einen imaginären Punkt bei der Lenkraddrehung zu folgen, kann kontinuierlich oder in Stufen durchgeführt werden.

In einer vorteilhaften Ausgestaltung des erfinderischen Verfahrens wird der mindestens eine einstellbare Luftausströmer in Lenkradnähe so verstellt, dass während und/oder nach der Ausführung der Lenkraddrehung die Richtung des Luftstroms verstellt wird. Das bedeutet, dass der Luftstrom hinsichtlich seiner Ausrichtung der Drehung des Lenkrads folgt.

In einer weiteren vorteilhaften Ausgestaltung des erfinderischen Verfahrens wird der mindestens eine einstellbare Luftausströmer in Lenkradnähe so verstellt, dass während und/oder nach der Ausführung der Lenkraddrehung die Auffächerung des Luftstroms verstellt wird. Dadurch kann beispielsweise, wenn sich durch die Lenkraddrehung eine Fahrerhand von dem Luftausströmer ungefähr senkrecht zur Ausströmrichtung entfernt und dabei der Luftstrom gleichzeitig aufgefächert wird, die Hand weiterhin erreicht werden.

In einer anderen vorteilhaften Ausgestaltung des erfinderischen Verfahrens wird der mindestens eine einstellbare Luftausströmer in Lenkradnähe so verstellt, dass während und/oder nach der Ausführung der Lenkraddrehung die Intensität des Luftstroms verstellt wird. Dies kann beispielsweise - aber nicht ausschließlich - durch eine variable Drosselung des Luftausströmers, d.h. durch Öffnen oder Schließen oder durch eine variable Regelung eines Gebläses, das dem Luftausströmer vorgeschaltet ist, erreicht werden. Diese Art der Verstellung ermöglicht es, etwa wenn sich durch die Lenkraddrehung eine Fahrerhand von dem Luftausströmer ungefähr parallel zu der Ausströmrichtung entfernt, durch Erhöhung der Intensität des Luftstroms eine Änderung der Luftgeschwindigkeit auf der Fahrerhand zu minimieren.

Vorteilhaft ist es, wenn bei dem erfinderischen Verfahren während und/oder nach der Ausführung der Lenkraddrehung die Temperatur des Luftstroms aus dem mindestens einen einstellbaren Luftausströmer in Lenkradnähe verändert wird. Auf diese Weise kann ein Temperaturunterschied der Luft auf einer Fahrerhand, der sich durch eine sich verändernde Entfernung der Hand von dem Luftausströmer ergibt, kompensiert werden.

In einer bevorzugten Ausgestaltung des erfinderischen Verfahrens wird das Verfahren aktiviert oder deaktiviert, wenn ein der Vorrichtung zugeordneter Schalter bedient wird. Der Fahrer kann die Funktion so bewusst an- oder abschalten.

Schließlich ist es besonders vorteilhaft, wenn das erfinderische Verfahren aktiviert wird, wenn ein Verdeck oder Dach und/oder mindestens ein Fenster des Fahrzeugs geöffnet wird. Die Einschränkung der Klimatisierung des Fahrzeuginnenraums kann dann durch das erfinderische Verfahren zumindest teilweise kompensiert werden.

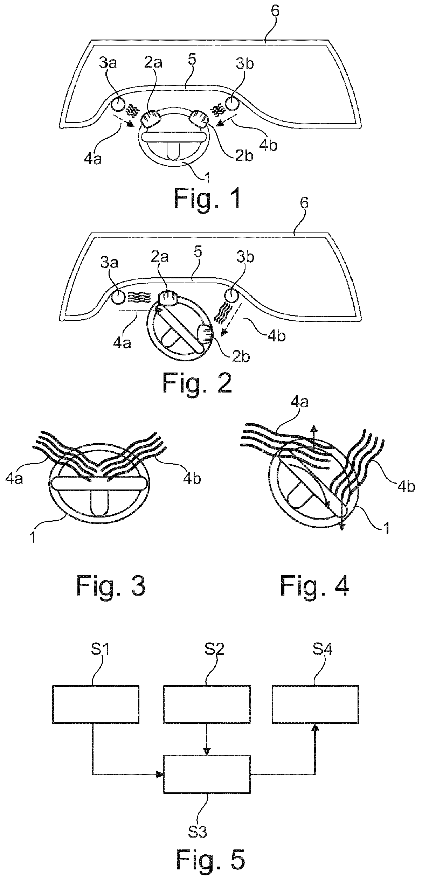

Eine beispielhafte Ausgestaltung der Erfindung ist in Fig.1 bis Fig. 5 dargestellt.

Fig. 1 zeigt die Anordnung der erfinderischen Vorrichtung im Fahrzeug bei Geradeaus-Stellung des Lenkrads. Auf dem Lenkrad **1** befinden sich die Fahrerhände **2** in "10 vor 2"-Stellung. Die linke Hand **2a** befindet sich auf der in Fahrtrichtung linken, die rechte Hand **2b** auf der rechten Seite des Lenkrads **1**. Die Luftausströmer **3** sind Düsen, deren Ausströmquerschnitte im Wesentlichen parallel zu der Lenkradebene liegen. Die Luftausströmer **3** erzeugen einen Luftstrom 4, der auf die Fahrerhände **2** gerichtet ist. Der linke Luftausströmer **3a** ist links versetzt zum Lenkrad **1** in Lenkradnähe angeordnet und belüftet den linken Teil der Lenkradumgebung, insbesondere die linke Fahrerhand **2a**, mit einem Luftstrom **4a**. Der rechte Luftausströmer **3b** ist rechts versetzt zum Lenkrad **1** in Lenkradnähe angeordnet und belüftet den rechten Teil der Lenkradumgebung, insbesondere die rechte Fahrerhand **2b**, mit einem Luftstrom **4b.** Die Luftausströmer **3** sind an der Instrumententafel **5** angebracht, die sich unterhalb der Windschutzscheibe **6** befindet.

In Fig. 2 wird die Anordnung der erfinderischen Vorrichtung bei einer Verdrehung des Lenkrads gezeigt. Das Lenkrad **1** ist um etwa 45° nach rechts verdreht, wodurch sich die Positionierung der Fahrerhände **2** ändert. Die linke Fahrerhand **2a** ist leicht nach oben und nach rechts verschoben, während die rechte Fahrerhand **2b** nach unten und leicht nach rechts verschoben ist. In Ausführung des erfinderischen Verfahrens werden die Luftausströmer **3** verstellt, so dass der Luftstrom **4** verändert wird. Der linke Luftausströmer **3a** wird so verstellt, dass der linke Luftstrom **4a** der linken Fahrerhand **2a** folgt. Dazu wird der linke Luftstrom **4a** weiter nach oben ausgerichtet. Der rechte Luftausströmer **3b** wird so verstellt, dass der rechte Luftstrom **4b** der rechten Fahrerhand **2b** folgt. Dazu wird der rechte Luftstrom **4b** weiter nach unten ausgerichtet.

Fig. 3 zeigt den linken Luftstrom **4a** und den rechten Luftstrom **4b** in Bezug auf das Lenkrad **1** bei Geradeaus-Stellung des Lenkrads.

In Fig. 4 ist Ausrichtung des linken Luftstroms **4a** und des rechten Luftstroms **4b** bei der Verdrehung des Lenkrads **1** nach rechts und angenommener "10 vor 2"-Stellung der Fahrerhände **2** zu sehen.

In Fig. 5 ist der vereinfachte Ablauf einer Ausgestaltung des erfinderischen Verfahrens dargestellt. In Schritt **S1** werden die Positionen der Fahrerhände **2** erfasst. Dies kann mit Hilfe von Sensorik durchgeführt werden, oder auch als Abschätzung basierend auf empirischen Daten und/oder Fahrinformationen. Die Konditionierung der Luft zur Belüftung der Lenkradumgebung durch die Klimaanlage des Fahrzeugs geschieht in Schritt **S2**. Dabei werden Lufttemperatur und Luftfeuchtigkeit eingestellt. In Schritt **S3** werden die Anforderungen für die Lenkradbelüftung verarbeitet, wobei unter Berücksichtigung der Positionierung der Fahrerhände **2** und der durch die Klimaanlage des Fahrzeuges vorgegebenen Randbedingungen hinsichtlich Luftkonditionierung die Vorgaben für die Belüftung der Lenkradumgebung und insbesondere der Fahrerhände **2** erstellt werden. Schließlich werden in Schritt S4 die Richtung, Auffächerung und Intensität des Luftstroms **4** an dem mindestens einen Luftausströmer **3** eingestellt.

### Bezugszeichenliste

- **1**: Lenkrad
- **2, 2a, 2b**: Fahrerhände
- **3, 3a, 3b**: Luftausströmer
- **4, 4a, 4b**: Luftstrom
- **5**: Instrumententafel
- **6**: Windschutzscheibe

- **S1**: Erfassen der Positionen der Fahrerhände
- **S2**: Konditionieren der Belüftungsluft durch die Klimaanlage
- **S3**: Verarbeiten der Anforderungen für die Lenkradbelüftung
- **S4**: Einstellen der Richtung, Auffächerung und Intensität des Luftstroms

## Patentansprüche

1. Vorrichtung zur Belüftung einer Lenkradumgebung eines Fahrzeugs, enthaltend mindestens einen einstellbaren Luftausströmer (3) in Lenkradnähe, wobei die Einstellbarkeit des mindestens einen Luftausströmers (3) dazu ausgebildet ist, mindestens einen imaginären Punkt auf dem Lenkrad bei verschiedenen Drehwinkeln des Lenkrads (1) mit einem Luftstrom (4) zu erreichen **dadurch gekennzeichnet, dass**
der mindestens eine Luftausströmer (3) synchron mit einer Lenkraddrehung verstellt werden kann, so dass der Luftstrom (4) während und/oder nach der Ausführung der Lenkraddrehung der Bewegung des mindestens einen imaginären Punktes auf dem Lenkrad (1) näherungsweise folgt.

2. Vorrichtung nach Anspruch 1,
**dadurch gekennzeichnet, dass**
der mindestens eine einstellbare Luftausströmer (3) eine Düse ist, deren Ausströmquerschnitt im Wesentlichen parallel zu der Lenkradebene liegt.

3. Vorrichtung nach einem der vorhergehenden Ansprüche,
**dadurch gekennzeichnet, dass**
die Vorrichtung Mittel enthält, die dazu ausgebildet sind, die Temperatur und/oder Luftfeuchtigkeit des Luftstroms (4) des mindestens einen Luftausströmers (3) zu verstellen.

4. Vorrichtung nach einem der vorhergehenden Ansprüche,
**dadurch gekennzeichnet, dass**
die Vorrichtung Messmittel beinhaltet, die konfiguriert sind, die Position mindestens einer Hand (2) auf dem Lenkrad (1) zu erfassen.

5. Vorrichtung nach Anspruch 4,
**dadurch gekennzeichnet, dass**
die Messmittel mindestens einen Kapazitätssensor enthalten.

6. Vorrichtung nach einem der Ansprüche 4 oder 5,
**dadurch gekennzeichnet, dass**
die Messmittel mindestens einen Drucksensor enthalten.

7. Vorrichtung nach einem der Ansprüche Anspruch 4 bis 6,
**dadurch gekennzeichnet, dass**
die Messmittel mindestens eine Kamera enthalten.

8. Vorrichtung nach einem der vorhergehenden Ansprüche,
**dadurch gekennzeichnet, dass**
die Vorrichtung weitere Messmittel beinhaltet, die konfiguriert sind, Feuchtigkeit auf mindestens einer Hand (2) und/oder der Lenkradoberfläche zu erfassen.

9. Vorrichtung nach einem der vorhergehenden Ansprüche,
**dadurch gekennzeichnet, dass**
die Vorrichtung mindestens einen Schalter beinhaltet, mit dem sie aktiviert und/oder deaktiviert werden kann.

10. Vorrichtung nach einem der vorhergehenden Ansprüche,
**dadurch gekennzeichnet, dass**
die Vorrichtung ein Lenkrad (1) enthält, dessen Oberfläche einen geringen Wärmeeindringkoeffizienten aufweist.

11. Verfahren zum Betrieb einer Vorrichtung nach einem der Ansprüche 1 bis 10, wobei die Vorrichtung mindestens einen einstellbaren Luftausströmer (3) in der Nähe eines Lenkrads (1) aufweist, wobei die Einstellbarkeit des mindestens einen Luftausströmers (3) dazu ausgebildet ist, mindestens einen imaginären Punkt auf dem Lenkrad bei verschiedenen Drehwinkeln des Lenkrads (1) mit einem Luftstrom (4) zu erreichen, und wobei der mindestens eine Luftausströmer (3) synchron mit einer Lenkraddrehung verstellt werden kann, **dadurch gekennzeichnet, dass**
der mindestens eine einstellbare Luftausströmer (3) in Lenkradnähe so verstellt wird, dass der Luftstrom (4) während und/oder nach der Ausführung der Lenkraddrehung der Bewegung mindestens eines imaginären Punktes auf dem Lenkrad (1) näherungsweise folgt.

12. Verfahren nach Anspruch 11,
**dadurch gekennzeichnet, dass**
der mindestens eine einstellbare Luftausströmer (3) in Lenkradnähe so verstellt wird, dass während und/oder nach der Ausführung der Lenkraddrehung die Richtung des Luftstroms (4) verstellt wird.

13. Verfahren nach einem der Ansprüche 11 oder 12,
**dadurch gekennzeichnet, dass**
der mindestens eine einstellbare Luftausströmer (3) in Lenkradnähe so verstellt wird, dass während und/oder nach der Ausführung der Lenkraddrehung die Auffächerung des Luftstroms (4) verstellt wird.

14. Verfahren nach einem der Ansprüche 11 bis 13,
**dadurch gekennzeichnet, dass**
der mindestens eine einstellbare Luftausströmer (3) in Lenkradnähe so verstellt wird, dass während und/oder nach der Ausführung der Lenkraddrehung die Intensität des Luftstroms (4) verstellt wird.

15. Verfahren nach einem der Ansprüche 11 bis 14,
**dadurch gekennzeichnet, dass**
während und/oder nach der Ausführung der Lenkraddrehung die Temperatur des Luftstroms (4) aus dem mindestens einen einstellbaren Luftausströmer (3) in Lenkradnähe verändert wird.

16. Verfahren nach einem der Ansprüche 11 bis 15,
**dadurch gekennzeichnet, dass**
das Verfahren aktiviert oder deaktiviert wird, wenn ein der Vorrichtung zugeordneter Schalter bedient wird.

17. Verfahren nach einem der Ansprüche 11 bis 16,
**dadurch gekennzeichnet, dass**
das Verfahren aktiviert wird, wenn ein Verdeck oder Dach und/oder mindestens ein Fenster des Fahrzeugs geöffnet wird.
